Europäisches Patentamt

European Patent Office

Office européen des brevets

(19)

(11) Veröffentlichungsnummer : **0 148 884**
**B1**

(12) **EUROPÄISCHE PATENTSCHRIFT**

(45) Veröffentlichungstag der Patentschrift :
23.03.88

(51) Int. Cl.⁴ : **A 47 J 37/10**

(21) Anmeldenummer : 84902511.9

(22) Anmeldetag : 15.06.84

(86) Internationale Anmeldenummer :
PCT/EP 84/00176

(87) Internationale Veröffentlichungsnummer :
WO/8500096 (17.01.85 Gazette 85/02)

(54) FEUERSICHERER FETT-, DUNST- UND GERUCHFANGDECKEL.

(30) Priorität : 27.06.83 DE 3323066

(43) Veröffentlichungstag der Anmeldung :
24.07.85 Patentblatt 85/30

(45) Bekanntmachung des Hinweises auf die Patenterteilung : 23.03.88 Patentblatt 88/12

(84) Benannte Vertragsstaaten :
AT BE CH DE FR GB LI NL SE

(56) Entgegenhaltungen :
EP-A- 0 039 754
DE-A- 2 925 660
DE-C-   157 602
FR-A- 1 170 983
US-A- 1 368 007
US-A- 2 587 773
US-A- 2 664 169
US-A- 3 528 236

(73) Patentinhaber : ING. WESSINGER GMBH
Schwieberdingerstrasse 120
D-7015 Korntal-Münchingen 2 (DE)

(72) Erfinder : WESSINGER, Marion
Gerhard Hauptmann Str. 8
D-7257 Ditzingen 1 (DE)

(74) Vertreter : Kreher, Dietmar et al
Wettertalstrasse 16
D-7257 Ditzingen 1 (DE)

## Beschreibung

Die Erfindung betrifft einen feuersicheren Fett-, Dunst- und Geruchfangdeckel zum Abdecken von Koch- und Bratgefäßen, mit einem Deckelgriff und einer auswechselbaren Filtereinrichtung, die den Fett- und Dunstaustritt oder auch den Geruch des Koch- oder Bratgutes aufnimmt oder neutralisiert und die lose über einen Lochblech- oder Gitterdeckel gelegt ist.

Durch die Druckschriften EP-A-00 39 754 und die DE-A-29 25 660 ist ein Deckel zum Abdecken von Koch- oder Bratgefäßen bekannt, der aus Pappe bzw. aus Karton besteht und auf seiner Oberfläche Ausschnitte aufweist, über die ein Filterpapier lose aufgelegt ist. Dieser Pappdeckel soll auf einen Kochtopf oder eine Bratpfanne aufgelegt, die aus dem Kochtopf oder aus der Bratpfanne austretenden fetthaltigen Dunst bzw. Fettspritzer von der Kocheinrichtung bzw. von dem Herd und dessen Umgebung fernhalten. Den beiden bekannten Gegenständen haftet aber der entscheidende Nachteil an, daß das lose aufgelegte saugfähige Papier, das als Filter wirken soll, in beiden Fällen von den Dämpfen aus dem Topf oder der Pfanne hochgehoben wird, wodurch die Filterwirkung über die ganze Fläche nicht mehr vorhanden ist, da das lose aufgelegte saugfähige Papier sich nirgends am äußeren Umfang des Deckels abstützen kann und fetthaltige Dünste oder Fettspritzer trotzdem entweichen können. Außerdem ragt das von Fettdünsten oder Fettspritzern getränkte Papier über den Topf- oder Pfannenrand hinaus und ist an dieser Stelle durch feuerheiße Dämpfe, die außerhalb des Topfes oder der Pfanne sich befinden oder gar durch eine hochbrennende Gasflamme leicht entzündbar. Dieses macht die bekannten Pappdeckel mit einem Filter aus saugfähigem Papier zu einem äußerst gefährlichem Gerät, wenn es bestimmungsgemäß im Haushalt während des Koch- oder Bratvorgangs zum Abdecken von Töpfen oder Pfannen verwendet wird. Zumal jeder Luftzug oder jede ungeschickte Bewegung des Topfes oder der Pfanne die leichte Abdeckung aus Pappkarton und Papier abrutschen lässt. Dadurch wird die Entzündungsgefahr der leichten Abdeckung umso größer und wird auch durch andere gerade in Betrieb befindliche benachbarte Brennstellen des Kochherdes erheblich begünstigt. Da der Pappdeckel selbst während des Koch- oder Bratvorgangs Feuchtigkeit oder Fett aufnimmt, gerät die Pappe außer Form und verwirft sich, was sowohl die Filterwirkung über die Fläche des Topfes oder der Pfanne aufhebt und ein Abrutschen des Pappdeckels von dem Topf oder der Pfanne begünstigt. Außerdem besteht noch der große Nachteil, daß man diese Pappdeckel mit Filter, die ja mit Fett getränkt sind, nicht neben dem Topf oder der Bratpfanne ablegen kann, ohne die Kocheinrichtung in einem Grade zu verschmutzen, was ja eigentlich verhindert werden soll, aber hauptsächlich beim Braten ist es erforderlich den « Spritzschutz » ab und zu abzunehmen, da das Bratgut öfter gewendet werden muß.

Durch das US-A- 3.528.236 ist weiterhin ein Pfannendeckel bekannt, der aus zwei ineinanderfügbaren Ringen besteht, zwischen denen ein Stück Filterpapier festgeklemmt werden kann. Diese bekannte Ausführung eines auf Pfannen aufsetzbaren Deckels ist aber ebenfalls nicht sicher, da sich der mit Fett getränkte Filter auch entzünden kann. Außerdem muß das Papier des Filters aus reißfesten Material bestehen, damit es bei der schiebenden Klemmbefestigung zwischen den beiden Halteringen nicht beschädigt wird. Die mehrteilige Einrichtung erfordert vor dem Gebrauch einen nicht unerheblichen Montageaufwand ehe die Einrichtung gebrauchsfertig ist.

Es ist deshalb die Aufgabe der Erfindung einen feuersicheren Fett-, Dunst- und Geruchfangdeckel nach dem Oberbegriff des Anspruches 1 zu schaffen, der so ausgebildet ist, daß sich seine Form nicht verziehen kann, der aus einem Material besteht, das unbrennbar und leicht zu pflegen ist, bei dem auch während des Koch- oder Bratvorgangs die Filtereinrichtung immer flächig das Loch- oder Gitterblech abdeckt und die Filtereinrichtung gegen feuerheiße Dämpfe oder hochsteigende Gasflammen geschützt ist.

Diese Aufgabe wird durch die im Anspruch 1 aufgeführten Maßnahmen gelöst.

Vorteilhafte Weiterbildungen des Gegenstandes nach der Erfindung sind in den Unteransprüchen enthalten.

Der feuersichere Fett-, Dunst- und Geruchfangdeckel nach der Erfindung weist außerdem noch die Vorteile auf, daß Kochstellen, die nicht mit den bekannten Dunstabzugshauben versehen sind, wirksam von fetthaltigen Dämpfen entlastet werden, die sich sonst auf allen Kücheneinrichtungsgegenständen ablagern würden. Der Gegenstand nach der Erfindung ist auch leicht zu reinigen und da er aus einem Metall besteht, das spülmaschinenfest ist, kann er auch in der Spülmaschine gereinigt werden. Ein weiterer Vorteil ist, daß die äußere Form rund oder oval oder auch eckig mit abgerundeten Kanten, der jeweiligen Form des Koch- oder Bratgefäßes angepasst, sein kann. Der Gegenstand nach der Erfindung ist aber auch an Kochstellen einsetzbar, bei denen bereits eine Dunstabzugshaube vorhanden ist, die dann weniger oft einer aufwendigen Reinigung unterzogen werden muß, da die erfindungsgemäße Einrichtung den austretenden fetthaltigen Dunst am Entstehungsort, an dem er noch die größte Fettkonzentration hat, abfängt.

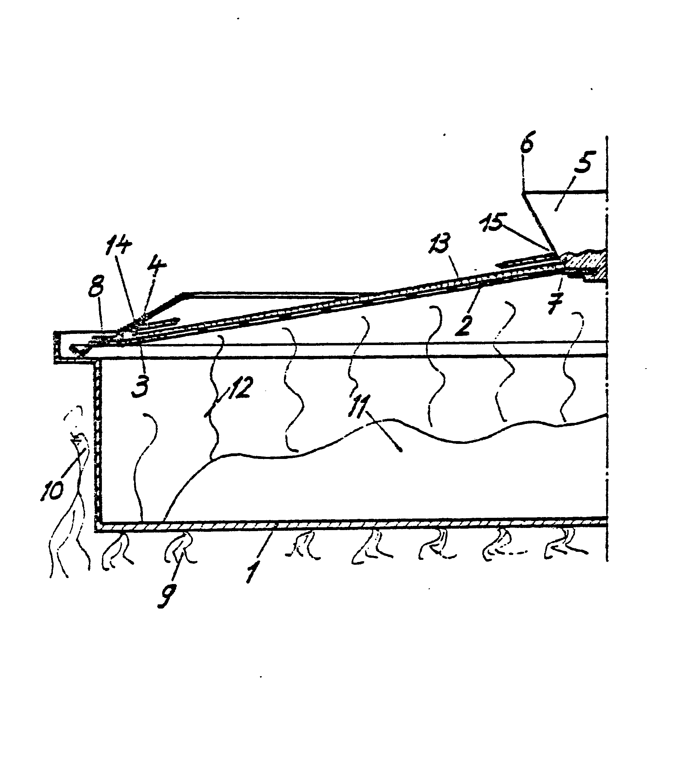

Die Erfindung wird anhand eines Beispieles beschrieben. Die Zeichnung zeigt einen Schnitt durch ein Koch- oder Bratgefäß mit einem ebenfalls geschnitten dargestellten auf das Gefäß aufgelegten Fett-, Dunst- und Geruchfangdeckel. Die Zeichnung zeigt nur die eine Hälfte des Gefäßes

und des Deckels, die andere Hälfte ist spiegelbildlich zu betrachten.

Die Zeichnung zeigt das Kochgefäß 1, das über der Heizquelle 9 erwärmt wird. Das Kochgefäß 1 wird mit dem erfindungsgemäß vorgeschlagenen Fett-, Dunst- und Geruchfangdeckel abgedeckt. Dieser besteht aus einem Lochblech-Gitterdeckel 3 mit den Dunstaustrittsöffnungen 2. An der Stelle 8 ist der Halte- und Feuerschutzring 4 angebracht. An der Stelle 7 ist der Deckelgriff 5 befestigt. Das Filter, das aus einem fett- und wasserdampfsaugenden Werkstoff besteht und auch geruchsneutralisierend wirkt, ist mit 13 bezeichnet.

Das etwas dehnbare Filter 13 ist über den etwas größeren Griffrand 6 zu dem etwas kleineren Deckelgriffinnenrand 7 geschoben und auf der anderen Filterseite unter den Halte- und Feuerschutzring 4 gebracht. Der Deckelgriffrand 6 und der Halte- und Feuerschutzring 4 verhindert durch seine konische Ausbildung das Abfallen des nur lose aufgelegten Filters 13 von dem Lochblech- oder Gitterdeckel 3, wenn dieser bewegt oder gewendet wird.

Das gegebenenfalls vorgeformte Filter 13 kann entsprechend der Deckelform passende Einschnitte aufweisen, so daß es leicht unter den Halte- und Feuerschutzring 4· und über den Deckelgriff 5 gelegt oder gestülpt werden kann.

Weiterhin verhindert der Halte- und Feuerschutzring 4, daß das fettgetränkte Filter 13 durch die feuerheißen Dämpfe 10 oder gar durch eine offen Flamme (bei Gasherden) entzündet wird.

Die vom Kochgut 11 aufsteigenden Dämpfe 12 können über die Öffnungen 2 im Lochblech- oder Gitterdeckel 3 durch die Filtereinrichtung 13 gereinigt und geruchsbefreit in den Kochraum entweichen.

Durch die konische Formgebung des Halte- und Feuerschutzringes 4 und des Deckelgriffes 5 wird weiterhin erreicht, daß auch bei einem erhöhten dampfdruck der Kochdunst nicht ungefiltert in den Küchenraum entweichen kann, wenn sich das Filter 13 anhebt. Dieses wird dadurch erreicht, weil das angehobene Filter 13 auf der Außenseite (äußerer Umfang) des Deckels sich an den Halte- und Feuerschutzring 4 an der Stelle 14 und an den Deckelgriff 5 an der Innenseite 15 dicht anlegt.

**Patentansprüche**

1. Feuersicherer, aus Metall bestehender Fett-, Dunst- und Geruchfangdeckel zum Abdecken von Koch und Bratgefäßen (1) mit einem Griff (5) und einer auswechselbaren Filtereinrichtung (13), die lose über ein Loch- oder Gitterblech (3) gelegt ist und die den Fett- und Dunstaustritt oder auch den Geruch des Koch- oder Bratgutes aufnimmt oder neutralisiert, dadurch gekennezeichnet, daß der äußere Umfang des Loch- oder Gitterbleches (3) von einem Halte- oder Feuerschutzring (4) umgeben ist, der aus einem Material besteht, das unbrennbar ist und sich leicht pflegen lässt, wobei der Halte- oder Feuerschutzring (4) am

Loch- und Gitterblech (3) mit dem Teil des Ringes (4), der den größeren Durchmesser aufweist, angebracht ist, wobei ein Teil des Loch- oder Gitterbleches (3) so von dem Halte- oder Feuerschutzring (4) überdeckt wird, daß zwischen dem Loch- oder Gitterblech (3) und dem Halte- oder Feuerschutzring (4) ein nach dem Griff (5) zu offener Zwischenraum verbleibt, daß der Halte- und Feuerschutzring (4) von seiner Befestigungsstelle am Loch- oder Gitterblech (3) so hochgezogen ist, daß sich der Zwischen dem Gitterblech (3) so hochgezogen ist, daß sich der Zwischenraum Zwischen dem Loch- oder Gitterblech (3) und dem Halte- oder Feuerschutzring (4) in Richtung auf den Griff (5) zu vergrößert und gleichzeitig die in diesen Zwischenraum einschiebbare und im eingeschobenen Zustand auf dem Loch- oder Gitterblech (3) aufliegende und dabei dieses abdeckende Filtereinrichtung (13) gegen feuerheiße Dämpfe oder hochsteigende Gasflammen schützend übergreift un daß die Filtereinrichtung (13) so geformt ist, daß sie über den Griff (5) gestülpt und in den Zwischenraum unter dem Halte- oder Feuerschutzring (4) geschoben die Oberfläche des Loch- oder Gitterbleches (3) flächig abdeckt und auch bei erhöhtem Dampfdruck, der die Filtereinrichtung eventuell anhebt, an der Stelle (14) am Halte- oder Feuerschutzring (4) und an der Stelle (15) am konisch ausgebildetem Griff (5) anliegt und das Loch- oder Gitterblech (3) auch dann vollständig abdeckt.

2. Feuersicherer Fett-, Dunst- und Geruchfangdeckel nach Anspruch 1, dadurch gekennzeichnet, daß der Halte- oder Feuerschutzring (4) konisch ausgebildet ist und die obere Begrenzung für den äußeren Rand der vorgeformten, auf dem Loch- oder Gitterblech (3) aufliegenden Filtereinrichtung (13) bildet.

3. Feuersicherer Fett-, Dunst- und Geruchfangdeckel nach einem der Ansprüche 1 oder 2, dadurch gekennzeichnet, daß der Zwischenraum zwischen dem Loch- oder Gitterblech (3) und dem Halte- oder Feuerschutzring (4) in Richtung des Griffes (5) vergrößert ausgeführt ist.

4. Feuersicherer Fett-, Dunst- und Geruchfangdeckel nach einem der Ansprüche 1 bis 3, dadurch gekennzeichnet, daß die zwischen dem Loch- oder Gitterblech (3) und dem Halte- oder Feuerschutzring (4) einlegbare Filtereinrichtung (13) aus einem schwer entflammbaren Fließstoff besteht.

**Claims**

1. A fireproof, fat-, vapour- and smell-retaining lid of metal for the covering of cooking pots and frying pans (1) having a grip (5) and a replaceable filteration element (13) that is laid loose over a perforated or grid-punched metal cover and that absorbs or neutralizes any fat and vapour and also any smell that may be emitted by the material being cooked or fried characterized by the outer circumference of the perforated or grid-punched sheet-metal cover (3) being encompassed by a retaining and fire-protection ring (4) that is of a material that is incombustable and that can be easily cleaned, whereby that part of the retaining and fire-protection ring (4) that has the largest diameter is secured to the perforated or grid-punched sheet-metal cover (3) whereby a part of the perforated or grid-punched sheet-metal cover (3) is so covered by the retaining and fire-protection ring (4) that, in the direction of the cover grip (5), an open space remains between the said retaining and fire-protection ring (4) and the perforated or grid-punched sheet-metal cover (3) ; by the said retaining and fire-protection ring (4) rising away from its fastening position on the perforated or grid-punched sheet-metal cover (3) sufficiently for there to be an intermediate space between the perforated or grid-punched sheet-metal cover (3) and the retaining and fire-protection ring (4) that increases in depth in the direction of the grip (5) ; by the said retaining and fire-protection ring at the same time providing a cover for the filteration element (13) and protecting it from any vapours that may be hot enough to cause ignition or from any rising gas flames ; and by the filteration element (13) being so formed that it can be drawn over the grip (5) and passed into the said intermediate space so that it cover (13) and, in the event of the said filteration element (13) being lifted as a result of high steam pressure, by its coming to rest against a position (14) on the retaining and fire-protection ring (4) and on a position (15) on the tapering grip (5) so that is still provides full cover for the perforated or grid-punched sheet-metal cover (3).

2. A fireproof, fat-, vapour- and smell-retaining lid in accordance with Claim 1, characterized by the retaining and fire-protection ring (4) being conical in form and forming an upper limitation to the movement of the outer edge of the filteration element (13) resting on the perforated or grid-punched sheet-metal cover (3).

3. A fireproof, fat-, vapour- and smell-retaining lid in accordance with Claim 1 or Claim 2, characterized by the intermediate space between the perforated or grid-punched sheet-metal cover (3) and the retaining and fire-protection ring (4) increasing in depth in the direction of the grip (5).

4. A fireproof, fat-, vapour- and smell-retaining lid in accordance with one of the claims 1 to 3, characterized by the filteration element (13) that can be inserted between the perforated or grid-punched cover (3) and the retaining and fire-protection ring (4) being of hardly combustable granular material.

**Revendications**

1. Couvercle ignifuge, en métal, retenant graisses, vapeurs, odeurs servant à couvrir les ustensiles de cuisson et de friture (1), comportant un manche (5) et un filtre amovible (13) qui est posé librement sur une tôle perforée ou à grille (3) et qui absorbe ou neutralise les graisses et les vapeurs évacuées ou encore les odeurs des aliments cuits ou frits, caractérisé par le fait que la circonférence extérieure de la tôle perforée ou à grille (3) est entourée d'une bague de serrage ou antifeu (4) faite en matière non inflammable et facile d'entretien ; la bague (4) est montée sur la tôle perforée et à grille (3) avec la partie de la bague (4) présentant le plus grand diamètre, une partie de la tôle perforée ou à grille (3) étant recouverte par la bague de serrage ou antifeu (4) si bien qu'entre la tôle (4) et la bague (4), il reste en direction du manche (5) un intervalle libre tel que la bague (4) est relevée par sa fixation sur la tôle (3) et la bague (4) augmente en direction du manche (5) et que simultanément le filtre (13) insérable dans cet intervalle et une fois inséré, portant bien sur la tôle perforée et à grille (3) et recouvrant alors celle-ci chevauche tout en protégeant des vapeurs chaudes ou des flammes de gaz montantes. Le filtre (13) a une configuration telle qu'il puisse être mis sur le manche (5) et que, inséré dans l'intervalle en dessous de la bague de serrage ou antifeu (4), il couvre toute la surface de la tôle (3) et qu'il porte bien, à l'endroit (14), au niveau de la bague (4) et à l'endroit (15) du manche conique (5) et qu'il recouvre parfaitement la tôle (3) aussi, même en présence d'une pression de vapeur accrue susceptible éventuellement de soulever le filtre.

2. Couvercle ignifuge retenant graisses, vapeurs, odeurs conformément à la prétention 1, caractérisé par le fait que la bague de serrage ou antifeu (4) a une configuration conique et qu'elle constitue la limite supérieure du bord extérieur du filtre (13) préformé portant sur la tôle perforée ou à grille (3).

3. Couvercle ignifuge retenant graisses, vapeurs, odeurs conformément à une des prétentions 1 ou 2, caractérisé par le fait que l'intervalle entre la tôle perforée ou à grille (3) et la bague de serrage ou antifeu (4) est exécuté de sorte qu'il est plus grand en direction du manche (5).

4. Couvercle ignifuge retenant graisses, vapeurs, odeurs conformément à une des prétentions 1 à 3, caractérisé par le fait que le filtre insérable entre la tôle perforée ou à grille (3) et la bague de serrage ou antifeu (4) est en non-tissé difficilement inflammable.